# EUROPEAN PATENT SPECIFICATION

(11) **EP 0 849 059 B1**
(45) Date of publication and mention of the grant of the patent: **09.06.2004**
(21) Application number: 97309392.5
(22) Date of filing: 21.11.1997
(51) Int. Cl.: B28D 1/04, B23D 45/10, B23D 47/12

(54) **Twin blade V-groove cutter**
Doppelblatt V-Nut-Schneidvorrichtung
Dispositif de coupe à deux lames pour couper des rainures sous forme de V

(30) Priority: 22.11.1996 GB 9624326
(43) Date of publication of application: 24.06.1998
(73) Proprietor: Speedie, Andrew, Randalstown BT41 3HW, County Antrim, Northern Ireland (GB); Brown, Robert, Magherafelt BT45 6HW, County Londonderry, Northern Ireland (GB)
(72) Inventor: Speedie, Andrew, Randalstown BT41 3HW, County Antrim, Northern Ireland (GB); Brown, Robert, Magherafelt BT45 6HW, County Londonderry, Northern Ireland (GB)
(74) Representative: McCarthy, Denis Alexis

(56) References cited:
- DE-A- 3 533 757
- DE-U- 9 410 988
- FR-A- 1 429 447
- GB-A- 2 202 788
- US-A- 4 208 934
- US-A- 4 372 174

## Description

This invention relates to a cutting apparatus for cutting tracks in walls and floors, etc.

Tracks are cut in walls, usually of cementatious material, for accommodating wires, pipes, etc., or conduits for wires, pipes, etc, which can then be hidden in the wall behind a plastered finished surface. GB 2 202 788A describes a cutting apparatus having a power saw with two parallel blades mounted on a frame designed to create cuts in a wall. The frame locates the power saw next to the wall, and the saw is moved up and down the frame to create the cuts. However, the material remaining between the cuts still needs to be chipped out to form the track, and doing this with chisel and hammer involves further time and effort, as well as still creating dust and debris that needs to be cleared up.

According to the present invention, there is provided a cutting apparatus adapted to make a V-shaped cut in a wall or floor surface so as to cut a track for accommodating wires or pipes, the apparatus having two powered disc blades mounted on a carriage means for movement along or across the surface, wherein the blades are angled towards each other such that the cutting edges of the blades are proximate wherein the carriage means comprises two arms and connecting support, each arm supporting one axle on which a blade is mounted.

The cutting apparatus of the present invention creates a V-shaped cut in a surface, from which any remaining material can be removed to form the track for a wire or conduit etc. Preferably, the gap between cutting edges of the blades is such as to leave a 'neck' connecting the material that passes between the cutting edges of the blades during cutting to the surface. The neck of connected material can then easily be broken, e.g. by a screwdriver, to remove all the remaining material wholly or substantially complete, thereby reducing significantly the mess and debris created.

Preferably, one or more streams of liquid, e.g. water sprays, are directed at or near the cutting edges of the blades during use. The liquid(s) dampen down and reduce, usually considerably, the amount of dust created during the cutting operation. This reduces atmospheric pollution and visibility problems. A collecting means, e.g. bucket, could be located at the bottom of the surface being cut to collect the liquid and dust mixture to further reduce dirt and mess.

Preferably also, each arm is movable between a disengaged starting position prior to cutting and an engaged cutting position. The arms may be movable by rotation about pivotal axes between the connecting support and the arms. Movement of the blades between a starting position away from the surface and an engagement position within the surface allows the blades to more easily engage the surface at an angle, and to create a clean cut with connected material remaining between the cuts.

Preferably further, the blades are powered by a central power source, e.g. an electric or petrol motor, with a split transmission means to the blades. Because the blades are not parallel, the transmission means must be split in angular fashion, e.g. by using bevelled gears. The split transmission means ensures that both blades are running at the same speed.

The transmission means preferably includes at least one drive pulley for each blade. This allows easy adjustment of the tension as desired or necessary, and for adjustment to account for wear of the blades. The angle between the blades may be as desired or necessary, and is preferably adjustable according to the cut required or surface to be cut. Preferably the angle is or is near 60°.

The cutting apparatus may be used as a hand-held device. Preferably, the cutting apparatus is attached to or includes a support. This includes the carriage means being supported by an elongate frame as described in GB 2 022, 788 A. Said frame has two parallel guides to track the carriage means along a surface, e.g. a wall.

The cutting apparatus may be used on any suitable surface, e.g. wall, floor, ceiling, road, pavement, etc. Because it does not chip, shatter or otherwise destroy the surface (compared with chiselling, etc.), the cutting apparatus may be used on newly cemented surfaces which are still "fresh", (e.g. two days old orso). This speeds up considerably the building or finishing of a room or a house where it has previously been necessary to wait several days before a cemented wall would be dry enough to support itself under the effect of a chisel.

Embodiments of the present invention will now be described by way of example only and with reference to the accompanying drawings in which:-
Fig. 1 is a front view of a cutting apparatus according to the present invention on a support frame.
Fig. 2 is a side view of the apparatus and support frame of Fig. 1;
Fig. 3 is an enlarged plan view of the apparatus of Fig. 1; and
Fig. 4 is a diagrammatic side view of part of the cutting apparatus of Fig. 1.

Referring to the drawings, they show a cutting apparatus having two disc blades 2 mounted on a carriage 4. The blades 2 are angled towards each other such that their cutting edges 5 are proximate.

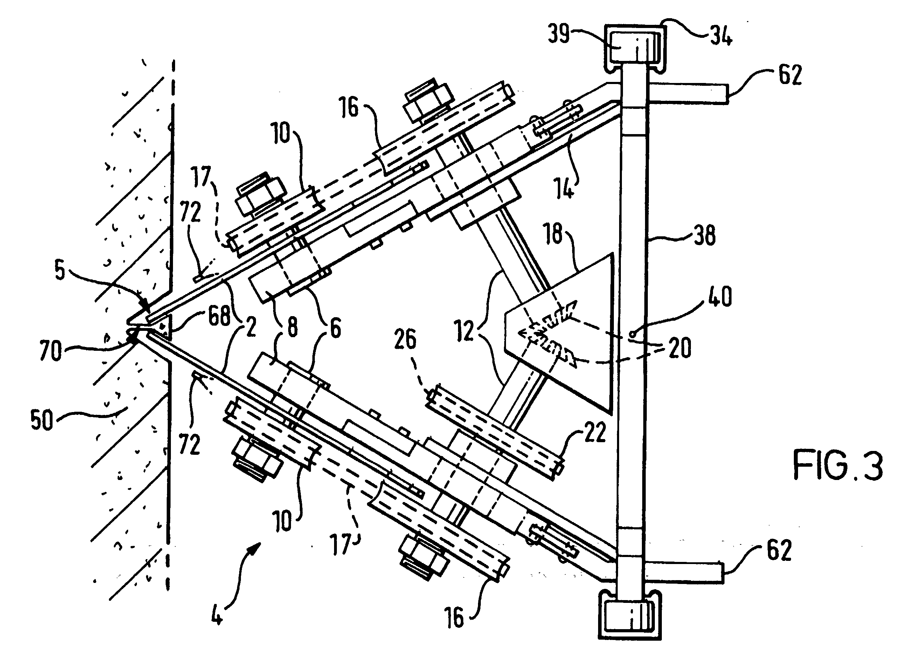

As shown more clearly in Fig. 3, the blades 2 are mounted on two first axles 6, supported by two radial arms 8. Also on the first axles 6 are first pulley wheels 10. Two second axles 12, supported by two mounting plates 14, have two second pulley wheels 16 co-linear with the first pulley wheels 10. Between the first and second pulley wheels 10,16 are first drive belts 17 (shown in dotted line).

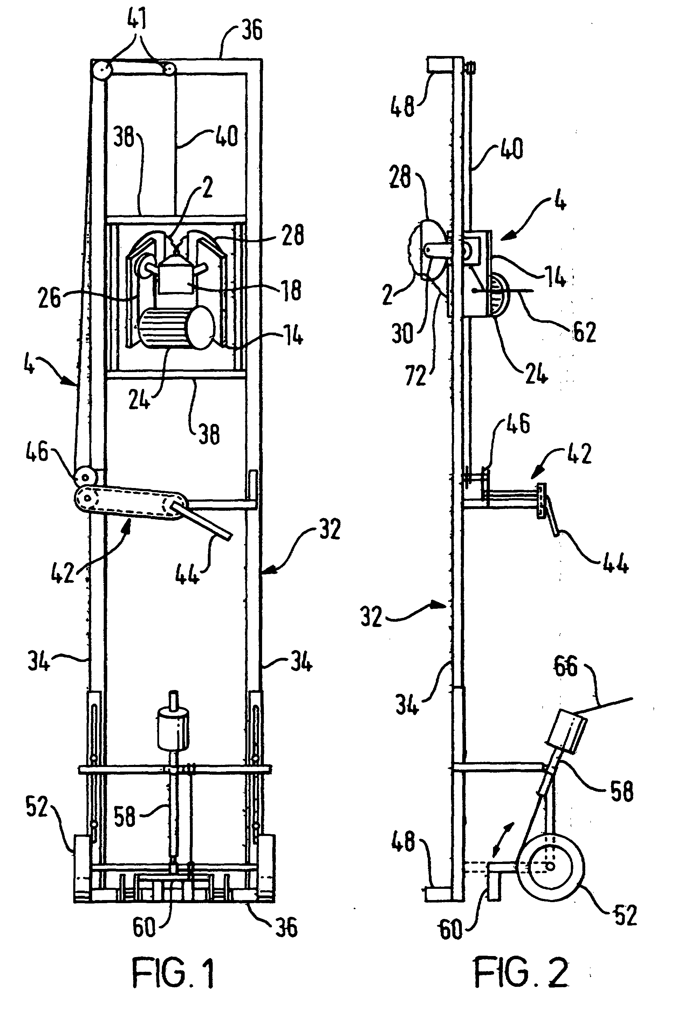

The second axles 12 extend into a transmission box 18 and have bevelled cog wheels 20 at their ends so that the second axles 12 rotate together. One second axle 12 also has a drive pulley wheel 22 which is co-linear with the drive wheel of an electric motor 24. Between the latter wheels is a second drive belt 26. In use, the electric motor 24 drives the drive pulley wheel 22, hence both second axles 12 (via the transmission box 18), both first axles 6 and thus the blades 2. Whilst not shown in Fig. 3 for clarity, Figs. 1 and 2 show blade guards 28 and first drive pulley guards 30 to provide protection against these parts during use.

The carriage 4 is mounted on an elongate support frame 32 having two parallel guides 34, top and bottom cross-members 36, and carriage support cross members 38. The carriage cross members 38 track the guides 34 using guide wheels 39, and the upper carriage cross member 38 is connected, e.g. by a wire rope 40 entrained around frame pulleys 41, to a winding mechanism 42. The construction and operation of the winding mechanism 42 corresponds to that as described on pages 5 onwards of GB 2 202 788 A. Rotation of the handle 44 causes winding of the reel 46 around which the wire rope 40 is entrained, causing the carriage 4 to move longitudinally along the guides 34.

The support frame 32 includes spacer bars 48 to ensure correct distancing of the frame 32 from the surface 50 to be cut. The frame 32 has wheels 52 to assist transport of the frame 32 for relocation, and a piston and cylinder arrangement 58 which can rotate a foot bar 60, which bar 60 is rotatable about the axis of the wheels 52 to secure the frame 32 in position for use.

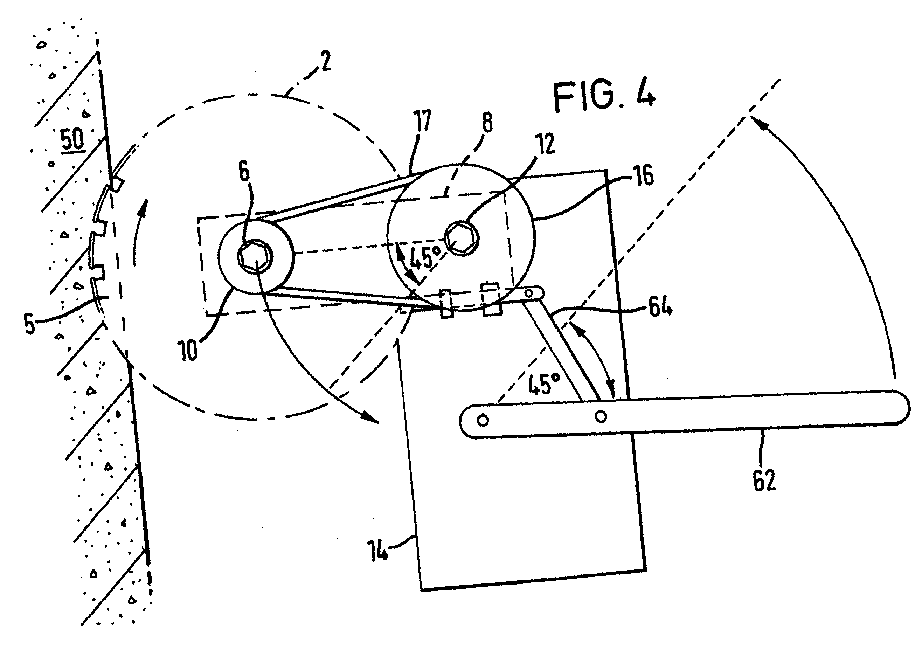

Fig. 4 shows diagrammatically the operation of engagement of the blades 2 into a surface 50. Whilst angled blades 2 (that is, blades directed to be at an angle to the surface) could be driven into the surface directly, or possible with ease when the cutting apparatus is freely held or supported, it is preferred for the operation of the blades 2 on the carriage 4 and frame 32 in this embodiment for the blades 2 to be driven into the surface 50 vertically. For this, the arms 8 supporting the blades 2 are rotatable about the second axles 12 using bushes (not shown) on the axles 12. The arms 8 are also attached to cutting handles 62 via three-point linkages 64. One end of the cutting handles 62 is attached to the mounting plates 14, whilst the other end extends outwardly from the carriage 4. Movement of the handles 62 rotates the arms 8 and hence blades 2. The two handles 62 may be linked or separate.

In use, the frame 32 is located against a desired surface 50. The spacer bars 48 provide correct distancing of the frame 32 from the wall 50. A handle 66 of the piston and cylinder arrangement 58 extends the piston downwardly to secure the foot bar 60 against a bottom surface (e.g. floor) and secure the frame 32. Preferably, the top cross member 36 abuts an upper surface (e.g. ceiling), or spacers can be put therebetween to confirm such engagement.

With the carriage 4 in the desired position along the frame 32, the motor 24 is started to rotate the blades 2, and the blades 2 are introduced into the surface 50 by moving the cutting handles 62 to a transverse position (Fig. 4). As shown in Fig. 3, the blades 2 create a V-cut, but with the bulk of material 68 (that not directly cut by the blades 2) still held to the surface by a neck 70.

The carriage 4 is progressed along the surface 50 by guidance within the frame 32 to create the required V-cut. Water is directed via nozzles 72 at the cutting to reduce the heat of the blades 2, and to dampen and reduce dust created by the cutting. Once finished, the blades 2 are withdrawn from the surface 50 by moving the cutting handles 62 upwardly.

Once the cutting apparatus is removed, the remaining material 68 is very simply and easily removed by breaking the neck 70, possibly with just a screwdriver.

This material 68, being the bulk of material removed for the track created, is thus removed still in solid form, rather than having been chipped or chiselled away (with attendant debris and mess). Along with removal of the dust created during cutting by the water spray, the present invention creates little mess and debris, especially scattered debris, requiring time and effort to clear away.

Variations and modifications can be made without departing from the scope of the invention described above and as defined in the claims hereinafter.

## Claims

1. A cutting apparatus adapted to make a V-shaped cut in a wall or floor surface (50) so as to cut a track for accommodating wires or pipes , the apparatus having two powered disc blades (2) mounted on a carriage means (4) for movement along or across the surface (50) wherein the blades (2) are angled towards each other such that the cutting edges (2) of the blades are proximate wherein the carriage means (4) comprises two arms (8) and a connecting support, each arm (8) supporting one axle (6) on which a blade (2) is mounted.

2. A cutting apparatus as daimed in Claim 1 **characterised in that** the gap between cutting edges (5) of the blades (2) is adapted to leave a 'neck' (70) of material still connected to the surface (50) after passage of the cutting apparatus.

3. A cutting apparatus as claimed in Claim 1 or Claim 2, **characterised in that** one or more streams or sprays of liquid are directed at or near the cutting edges (5) of the blades (2) during use.

4. A cutting apparatus as daimed in Claim 1, 2 or 3, **characterised in that** each arm (8) is movable between a disengaged starting position prior to cutting and an engaged cutting position.

5. A cutting apparatus as claimed in Claim 4, **characterised in that** the arms (8) are movable by rotation about pivotal axes between the connecting support and the arms (8) to move the blades (2) between a starting position away from the surface (50) and an engaged position within the surface (50).

6. A cutting apparatus as daimed in any one of the preceding daims, **characterised in that** the blades (2) are powered by a central power source (24) with a split transmission means to the blades (2).

7. A cutting apparatus as claimed in Claim 6, **characterised in that** the transmission means includes one or more bevelled gears (20).

8. A cutting apparatus as claimed in Claim 6 or 7, **characterised in that** the transmission means includes at least one drive pulley for each blade (2).

9. A cutting apparatus as claimed in Claim 8, **characterised in that** the tension in the or each pulley is adjustable.

10. A cutting apparatus as claimed in any one of the preceding claims, **characterised in that** the angle between the blades (2) is adjustable.

11. A cutting apparatus as claimed in any one of the preceding claims, **characterised in that** the angle between the blades (2) is or is near 60°.

12. A cutting apparatus as claimed in any one of the preceding claims, **characterised in that** the cutting apparatus is attached to or includes a support.

13. A cutting apparatus as claimed in Claim 12, **characterised in that** the support is an elongate frame (32) having two parallel guides (34) to track the carriage means (4) along the surface (50).

14. A cutting apparatus as claimed in Claim 13, **characterised in that** the elongate frame (32) includes a wheeled assembly (52, 58, 60) mounted at one end of the frame (32), the assembly being adapted to be surface-engaging and to help secure the frame against the surface (50).

## Patentansprüche

1. Schneidvorrichtung, die zur Herstellung eines V-förmigen Schnitts in einer Wand- oder Bodenfläche (50) ausgeführt ist, um eine Bahn zur Aufnahme von Drähten oder Rohren zu schneiden, wobei die Vorrichtung zwei angetriebene Scheibenmesser (2) aufweist, die an einem Schlittenmittel (4) zur Bewegung entlang oder quer über die Fläche (50) angebracht sind, wobei die Messer (2) in einem Winkel zueinander angebracht sind, so dass die Schneidkanten (2) der Messer nahe beieinander liegen, wobei das Schlittenmittel (4) zwei Arme (8) und eine Verbindungsstütze umfasst und jeder Arm (8) eine Achse (6) stützt, an der ein Messer (2) angebracht ist.

2. Schneidvorrichtung nach Anspruch 1, **dadurch gekennzeichnet, dass** der Spalt zwischen den Schneidkanten (5) der Messer (2) so ausgeführt ist, dass er einen Material-"Hals" (70) lässt, der nach dem Passieren der Schneidvorrichtung noch mit der Fläche (50) verbunden ist.

3. Schneidvorrichtung nach Anspruch 1 oder 2, **dadurch gekennzeichnet, dass** im Gebrauch ein oder mehrere Flüssigkeitsströme oder -strahlen auf die oder in die Nähe der Schneidkanten (5) der Messer (2) gerichtet sind.

4. Schneidvorrichtung nach Anspruch 1, 2 oder 3,
**dadurch gekennzeichnet, dass** jeder Arm (8) vor dem Schneiden zwischen einer ausgerückten Startposition und einer eingerückten Schneidposition beweglich ist.

5. Schneidvorrichtung nach Anspruch 4, **dadurch gekennzeichnet, dass** die Arme (8) durch Drehung um Schwenkachsen zwischen der Verbindungsstütze und den Armen (8) beweglich sind, um die Messer (2) zwischen einer Startposition von der Fläche (50) weg und einer eingerückten Position in der Fläche (50) zu bewegen.

6. Schneidvorrichtung nach einem der vorhergehenden Ansprüche, **dadurch gekennzeichnet, dass** die Messer (2) durch eine zentrale Antriebsquelle (24) mit einem Verzweigungsübertragungsmittel zu den Messern (2) angetrieben werden.

7. Schneidvorrichtung nach Anspruch 6, **dadurch gekennzeichnet, dass** das Übertragungsmittel ein oder mehrere Kegelräder (20) enthält.

8. Schneidvorrichtung nach Anspruch 6 oder 7, **dadurch gekennzeichnet, dass** das Übertragungsmittel mindestens eine Antriebsscheibe für jedes Messer (2) enthält.

9. Schneidvorrichtung nach Anspruch 8, **dadurch gekennzeichnet, dass** die Spannung in der oder jeder Scheibe verstellbar ist.

10. Schneidvorrichtung nach einem der vorhergehenden Ansprüche, **dadurch gekennzeichnet, dass** der Winkel zwischen den Messern (2) verstellbar ist.

11. Schneidvorrichtung nach einem der vorhergehenden Ansprüche, **dadurch gekennzeichnet, dass** der Winkel zwischen den Messern (2) 60° beträgt oder in der Nähe davon liegt.

12. Schneidvorrichtung nach einem der vorhergehenden Ansprüche, **dadurch gekennzeichnet, dass** die Schneidvorrichtung an einer Stütze befestigt ist oder diese enthält.

13. Schneidvorrichtung nach Anspruch 12, **dadurch gekennzeichnet, dass** die Stütze ein länglicher Rahmen (32) ist, der zwei Parallelführungen (34) aufweist, um das Schlittenmittel (4) entlang der Fläche (50) zu führen.

14. Schneidvorrichtung nach Anspruch 13, **dadurch gekennzeichnet, dass** der längliche Rahmen (32) eine mit Rädern versehene Anordnung (52, 58, 60) enthält, die an einem Ende des Rahmens (32) angebracht ist, wobei die Anordnung dazu ausgeführt ist, die Fläche in Eingriff zu nehmen und dazu beizutragen, den Rahmen an der Fläche (50) zu sichern.

## Revendications

1. Dispositif de coupe apte à faire des découpes en forme de V dans la surface d'un mur ou du sol (50), de manière à former une rainure apte à accueillir des fils ou des tuyaux, le dispositif comprenant deux lames de disque entraînées (2) montées sur un moyen de chariot (4) qui lui permet de se déplacer le long ou en travers de la surface (50), dans lequel les lames (2) sont inclinées l'une vers l'autre de telle sorte que les bords coupants (2) des lames soient proches, et dans lequel le moyen de chariot (4) comprend deux bras (8) et un support de connexion, chaque bras (8) supportant un essieu (6) sur lequel une lame (2) est montée.

2. Dispositif de coupe suivant la revendication 1, **caractérisé en ce que** l'espace entre les bords coupants (5) des lames (2) est apte à laisser un 'col' (70) de matière encore attaché à la surface (50) après le passage du dispositif de coupe.

3. Dispositif de coupe suivant la revendication 1 ou la revendication 2, **caractérisé en ce qu'**un ou plusieurs courants ou jets de liquide sont dirigés aux ou à proximité des bords coupants (5) des lames (2) durant l'utilisation.

4. Dispositif de coupe suivant la revendication 1, 2 ou 3, **caractérisé en ce que** chaque bras (8) est mobile entre une position de départ désengagée avant la coupe et une position de coupe engagée.

5. Dispositif de coupe suivant la revendication 4, **caractérisé en ce que** les bras (8) sont mobiles par une rotation autour d'axes pivotants entre le support de connexion et les bras (8) afin de déplacer les lames (2) entre une position de départ à l'écart de la surface (50) et une position engagée à l'intérieur de la surface (50).

6. Dispositif de coupe suivant l'une quelconque des revendications précédentes, **caractérisé en ce que** les lames (2) sont actionnées par une source de courant centrale (24) à l'aide d'un moyen de transmission réparti vers les lames (2).

7. Dispositif de coupe suivant la revendication 6, **caractérisé en ce que** le moyen de transmission comprend un ou plusieurs engrenage(s) conique(s) (20).

8. Dispositif de coupe suivant la revendication 6 ou 7, **caractérisé en ce que** le moyen de transmission comprend au moins une poulie de commande pour chaque lame (2).

9. Dispositif de coupe suivant la revendication 8, **caractérisé en ce que** la tension dans la ou dans chaque poulie est réglable.

10. Dispositif de coupe suivant l'une quelconque des revendications précédentes, **caractérisé en ce que** l'angle entre les lames (2) est réglable.

11. Dispositif de coupe suivant l'une quelconque des revendications précédentes, **caractérisé en ce que** l'angle entre les lames (2) est égal à ou est proche de 60°.

12. Dispositif de coupe suivant l'une quelconque des revendications précédentes, **caractérisé en ce que** le dispositif de coupe est attaché à ou comprend un support.

13. Dispositif de coupe suivant la revendication 12, **caractérisé en ce que** le support est un cadre allongé (32) comportant deux guides parallèles (34) permettant de faire glisser le moyen de chariot (4) le long de la surface (50).

14. Dispositif de coupe suivant la revendication 13, **caractérisé en ce que** le cadre allongé (32) comprend un ensemble équipé de roues (52, 58, 60) monté à une extrémité du cadre (32), l'ensemble étant adapté de manière à entrer en contact avec la surface et à aider à fixer le cadre contre la surface (50).
